(19) Europäisches Patentamt
European Patent Office
Office européen des brevets

(11) EP 4 043 510 A1

(12) **EUROPÄISCHE PATENTANMELDUNG**

(43) Veröffentlichungstag:
**17.08.2022 Patentblatt 2022/33**

(21) Anmeldenummer: **21157473.6**

(22) Anmeldetag: **16.02.2021**

(51) Internationale Patentklassifikation (IPC):
***C08G 18/16*** *(2006.01)* ***C08G 18/44*** *(2006.01)*
***C08G 18/48*** *(2006.01)* ***C08G 18/76*** *(2006.01)*
***C09D 175/04*** *(2006.01)*

(52) Gemeinsame Patentklassifikation (CPC):
**C08G 18/165; C08G 18/44; C08G 18/4866; C08G 18/7621; C09D 175/04;** C08G 2110/00; C08G 2110/0008; C08G 2110/0083

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **Hofmann, Joerg**
  **47800 Krefeld (DE)**
- **Faerber, Veronica-Alina**
  **51467 Bergisch Gladbach (DE)**
- **Braun, Stefanie**
  **51069 Köln (DE)**
- **Traving, Michael**
  **51399 Burscheid (DE)**

(74) Vertreter: **Levpat**
**c/o Covestro AG**
**Gebäude 4825**
**51365 Leverkusen (DE)**

(54) **VERFAHREN ZUR HERSTELLUNG VON POLYURETHAN-SCHAUMSTOFF**

(57) Die vorliegende Erfindung betrifft ein Verfahren zur Herstellung von Polyurethan-Schaumstoffen, wobei die Komponenten
**A** enthaltend
**A1** Verbindungen mit gegenüber Isocyanaten reaktionsfähigen Wasserstoffatomen, enthaltend
**A1.1** Polyethercarbonatpolyol,
**A2** Treibmittel
und gegebenenfalls
**A3** Hilfs- und Zusatzstoffe
und
**B** Di- und/oder Polyisocyanaten,
miteinander umgesetzt werden, dadurch gekennzeichnet, dass die Struktur von **A1.1** aufgebaut ist aus einer Starterverbindung S1 mit einem Molekulargewicht von 18 bis 200 g/mol an der ein erster, innerer Alkylenoxidblock enthaltend 0,5 bis 30 Gew.-% Ethylenoxid-Baueinheiten, bezogen auf die Gesamtmasse des eingesetzten Alkylenoxids in dem ersten Alkylenoxidblock, und ein zweiter, äußerer Block aus Kohlenstoffdioxid und Alkylenoxid angelagert ist.

EP 4 043 510 A1

## Beschreibung

Die vorliegende Erfindung betrifft ein Verfahren zur Herstellung von Polyurethan-Schaumstoffen, vorzugsweise von Polyurethan-Weichschaumstoffen, durch Reaktion einer Isocyanat-Komponente mit einer gegenüber Isocyanaten reaktiven Komponente, die mindestens ein Polyethercarbonatpolyol umfasst. Die Erfindung betrifft weiterhin durch das erfindungsgemäße Verfahren hergestellte Polyurethanschaumstoffe und deren Verwendung, sowie das erfindungsgemäß eingesetzte Polyethercarbonatpolyol.

Im Rahmen einer umweltfreundlichen Ausrichtung von Produktionsprozessen ist es generell wünschenswert, $CO_2$-basierte Ausgangsstoffe, beispielsweise in Form von Polyethercarbonatpolyolen, in relativ großen Mengen einzusetzen. Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 50 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat, im Folgenden auch als cPC bezeichnet, oder für R = H Ethylencarbonat, im Folgenden auch als cEC bezeichnet).

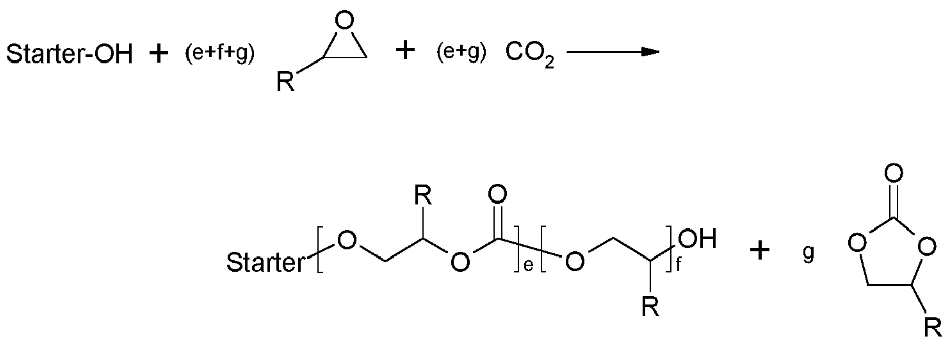

(I)

Die Herstellung von Polyurethan-Schaumstoffen auf Basis von Polyethercarbonatpolyolen und Isocyanaten ist bekannt (z.B. WO 2012/130760 A1, WO 2015/078801). Wichtig beim Einsatz von solchen Polyurethan-Schaumstoffen ist unter anderem eine Widerstandsfähigkeit gegenüber mechanischen Einflüssen um eine hohe Langlebigkeit der Polyurethan-Schaumstoffe zu erreichen.

Die Aufgabe der vorliegenden Erfindung bestand deshalb darin, ein Verfahren zur Herstellung von Polyurethan-Schaumstoffen umfassend Polyethercarbonatpolyole bereitzustellen, welches zu Polyurethan-Schaumstoffen mit einer höheren Zugfestigkeit und Bruchdehnung führt.

Überraschenderweise wurde diese Aufgabe gelöst durch ein Verfahren zur Herstellung von Polyurethan-Schaumstoffen, wobei die Komponenten

**A** enthaltend

**A1** Verbindungen mit gegenüber Isocyanaten reaktionsfähigen Wasserstoffatomen, enthaltend

**A1.1** Polyethercarbonatpolyol,

**A2** Treibmittel
und gegebenenfalls
**A3** Hilfs- und Zusatzstoffe
und

**B** Di- und/oder Polyisocyanaten,
miteinander umgesetzt werden, dadurch gekennzeichnet, dass die Struktur von **A1.1** aufgebaut ist aus einer Starterverbindung S1 mit einem Molekulargewicht von 18 bis 200 g/mol an der ein erster, innerer Alkylenoxidblock enthaltend 0,5 bis 30 Gew.-% Ethylenoxid-Baueinheiten, bezogen auf die Gesamtmasse des eingesetzten Alkylenoxids in dem ersten Alkylenoxidblock, und ein zweiter, äußerer Block aus Kohlenstoffdioxid und Alkylenoxid angelagert ist.

Bevorzugter Gegenstand der Erfindung ist ein Verfahren zur Herstellung von Polyurethan-Schaumstoffen, vorzugsweise von Polyurethan-Weichschaumstoffen, dadurch gekennzeichnet, dass Komponente **A1** die folgende Zusammensetzung aufweist:

**A1.1** 40 bis 100 Gew.-Teile Polyethercarbonatpolyol, vorzugsweise mit einer Hydroxylzahl gemäß DIN 53240-1 (Juni 2013) von 20 mg KOH/g bis 120 mg KOH/g,
**A1.2** 0 bis 60 Gew.-Teile Polyetherpolyol mit einer Hydroxylzahl gemäß DIN 53240-1 (Juni 2013) von 20 mg KOH/g bis 250 mg KOH/g und einem Gehalt an Ethylenoxid von 0 bis 60 Gew.-%, wobei Polyetherpolyol **A1.2** frei von Carbonateinheiten ist,
**A1.3** 0 bis 20 Gew.-Teile Polyetherpolyol mit einer Hydroxylzahl gemäß DIN 53240-1 (Juni 2013) von 20 mg KOH/g bis 250 mg KOH/g, und einem Gehalt an Ethylenoxid von > 60 Gew.-%, wobei Polyetherpolyol **A1.3** frei von Carbonateinheiten ist,
**A1.4** 0 bis 40 Gew.-Teile Polymerpolyol, PHD-Polyol und/oder PIPA-Polyol,
**A1.5** 0 bis 40 Gew.-Teile eines Polyols welches nicht unter die Definition der Komponenten **A1.1** bis **A1.4** fällt,

wobei die Angabe der Gewichtsteile jeweils bezogen sind auf die Summe der Gewichtsteile der Komponenten **A1.1** + **A1.2** + **A1.3** + **A1.4** + **A1.5** = 100 Gewichtsteile.
Die Komponenten **A1.1** bis **A1.5** beziehen sich jeweils auf "eine oder mehrere" der genannten Verbindungen. Bei Verwendung mehrerer Verbindungen einer Komponente entspricht die Mengenangabe der Summe der Gewichtsteile der Verbindungen.
In einer besonders bevorzugten Ausführungsform enthält Komponente **A1**

**A1.1** ≥ 65 bis ≤ 75 Gew.-Teile, höchst bevorzugt ≥ 68 bis ≤ 72 Gew.-Teile eines oder mehrerer Polyethercarbonatpolyole, vorzugsweise mit einer Hydroxylzahl gemäß DIN 53240-1 (Juni 2013) von ≥ 20 mg KOH/g bis ≤ 120 mg KOH/g sowie vorzugsweise einem $CO_2$-Gehalt von 10 bis 25 Gew.-%, und
**A1.2** ≤ 35 bis ≥ 25 Gew.-Teile, höchst bevorzugt ≤ 32 bis ≥ 28 Gew.-Teile eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤ 60 Gew.-%, wobei die Polyetherpolyole **A1.2** frei von Carbonateinheiten sind,

wobei die Komponente **A1** vorzugsweise frei ist von Komponente **A1.3** und/oder **A1.4.**
In einer anderen Ausführungsform umfasst Komponente **A1**

**A1.1** ≥ 65 bis ≤ 75 Gew.-Teile, bevorzugt ≥ 68 bis ≤ 72 Gew.-Teile eines oder mehrerer Polyethercarbonatpolyole, vorzugsweise mit einer Hydroxylzahl gemäß DIN 53240-1 (Juni 2013) von ≥ 20 mg KOH/g bis ≤ 120 mg KOH/g sowie vorzugsweise einem $CO_2$-Gehalt von 10 bis 25 Gew.-%, und
**A1.2** ≤ 35 bis ≥ 25 Gew.-Teile, bevorzugt ≤ 32 bis ≥ 28 Gew.-Teile eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤ 60 Gew.-%, wobei die Polyetherpolyole **A1.2** frei von Carbonateinheiten sind,
**A1.3** ≤ 20 bis ≥ 2 Gew.-Teile, bevorzugt ≤ 10 bis ≥ 2 Gew.-Teile, bezogen auf die Summe der Gew.-Teile der Komponenten **A1.1** und **A1.2,** eines oder mehrerer Polyetherpolyole mit einer Hydroxylzahl gemäß DIN 53240-1 (Juni 2013) ≥ 20 mg KOH/g bis ≤ 250 mg KOH/g, und einem Gehalt an Ethylenoxid von > 60 Gew.-%, wobei die Polyetherpolyole **A1.3** frei von Carbonateinheiten sind,

wobei die Komponente **A1** vorzugsweise frei ist von Komponente **A1.4.**
In einer weiteren Ausführungsform umfasst Komponente **A1**

**A1.1** ≥ 40 bis ≤ 100 Gew.-Teile, bevorzugt ≥ 60 bis ≤ 100 Gew.-Teile, besonders bevorzugt ≥ 80 bis ≤ 100 Gew.-Teile, höchst bevorzugt ≥ 65 bis ≤ 75 Gew.-Teile eines oder mehrerer Polyethercarbonatpolyole, vorzugsweise mit einer Hydroxylzahl gemäß DIN 53240-1 (Juni 2013) von ≥ 20 mg KOH/g bis ≤ 120 mg KOH/g sowie vorzugsweise einem $CO_2$-Gehalt von 10 bis 25 Gew.-%, und
**A1.2** ≤ 60 bis ≥ 0 Gew.-Teile, bevorzugt ≤ 40 bis ≥ 0 Gew.-Teile, besonders bevorzugt ≤ 20 bis ≥ 0 Gew.-Teile, höchst bevorzugt ≤ 35 bis ≥ 25 Gew.-Teile eines oder mehrerer Polyetherpolyole mit einer Hydroxylzahl gemäß DIN 53240-1 (Juni 2013) von ≥ 20 mg KOH/g bis ≤ 250 mg KOH/g und einem Gehalt an Ethylenoxid von ≥ 0 bis ≤

60 Gew.-%, wobei die Polyetherpolyole **A1.2** frei von Carbonateinheiten sind,

**A1.4** ≤ 40 bis ≥ 0,01 Gew.-Teile, bevorzugt ≤ 20 bis ≥ 0,01 Gew.-Teile, besonders bevorzugt ≤ 20 bis ≥ 1 Gew.-Teile, höchst bevorzugt ≤ 20 bis ≥ 2 Gew.-Teile, bezogen auf die Summe der Gew.-Teile der Komponenten **A1.1** und **A1.2,** eines oder mehrerer Polymerpolyole, PHD-Polyole und/oder PIPA-Polyole,

**A1.5** ≤ 40 bis ≥ 0 Gew.-Teilen, bezogen auf die Summe der Gew.-Teile der Komponenten **A1.1** und **A1.2,** Polyole, die nicht unter die Definition der Komponenten **A1.1** bis **A1.4** fallen,

wobei die Komponente **A1** vorzugsweise frei ist von Komponente **A1.3.**

Dabei sind die angegebenen Bereiche und Vorzugsbereiche der Komponenten **A1.1, A1.2, A1.4** und **A1.5** miteinander frei kombinierbar.

Im Folgenden sind die im erfindungsgemäßen Verfahren eingesetzten Komponenten näher beschrieben.

**Komponente A1**

Die Komponente **A1** umfasst Verbindungen mit gegenüber Isocyanaten reaktionsfähigen Wasserstoffatomen und enthält erfindungsgemäß mindestens ein Polyethercarbonatpolyol **A1.1.** Das Polyethercarbonatpolyol **A1.1** ist aufgebaut auf einer Starterverbindung S1 mit einem Molekulargewicht von 18 bis 200 g/mol, einem ersten, inneren Alkylenoxidblock enthaltend 0,5 bis 30 Gew.-% Ethylenoxid, bezogen auf die Gesamtmasse an Alkylenoxid in dem ersten Alkylenoxidblock, und einem zweiten, äußeren Block aus Kohlenstoffdioxid und Alkylenoxid.

Als Starterverbindung S1 mit einem Molekulargewicht von 18 bis 200 g/mol werden Verbindungen verstanden die gegenüber Alkoxylierung aktive H-Atome aufweisen, beispielsweise ein- oder mehrwertige Alkohole wie Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol. Es können auch Gemische aus verschiedenen Starterverbindungen S1 eingesetzt werden.

An der Starterverbindung S1 mit einem Molekulargewicht von 18 bis 200 g/mol ist ein erster, innerer Alkylenoxidblock angelagert. Der erste, innere Alkylenoxidblock besteht aus mindestens zwei Alkylenoxiden und enthält 0,5 bis 30 Gew.-% Ethylenoxid, bevorzugt 1 bis 25 Gew.-%, besonders bevorzugt 5 bis 22 Gew.-%, jeweils bezogen auf die Gesamtmasse des eingesetzten Alkylenoxids in dem ersten Alkylenoxidblock. Bevorzugt besteht der erste, innere Alkylenoxidblock nur aus Ethylenoxid und Propylenoxid.

An dem ersten inneren Alkylenoxidblock ist ein zweiter, äußerer Block aus Kohlenstoffdioxid und Alkyenoxid angelagert. Bevorzugt wird für den zweiten Block als Alkylenoxid Propylenoxid, Ethylenoxid oder eine Mischung aus beiden eingesetzt, besonders bevorzugt mindestens 90 Gew.-% Propylenoxid, ganz besonders bevorzugt nur Propylenoxid.

Das Polyethercarbonatpolyol **A1.1** wird beispielsweise durch einen Prozess erhalten, umfassend die Schritte

(i) Anlagerung von Alkylenoxid enthaltend 0,5 bis 30 Gew.-% Ethylenoxid zur Bildung eines ersten Alkylenoxidblocks an eine Starterverbindung S1 mit einem Molekulargewicht von 18 bis 200 g/mol, vorzugsweise in Anwesenheit eines DMC-Katalysators, woraus ein Alkylenoxidpolymer resultiert,

(ii) Anlagerung von Kohlenstoffdioxid und Alkylenoxid, vorzugsweise in Anwesenheit eines DMC-Katalysators, an das aus (i) resultierende Alkylenoxidpolymer zur Bildung eines Polyethercarbonatpolyols.

Die Schritte (i) und (ii) werden vorzugsweise in Anwesenheit eines DMC-Katalysators durchgeführt, wie beispielsweise DMC-Katalysatoren auf Basis von Zinkhexacyanocobaltat(III), Zinkhexacyanoiridat(III), Zinkhexacyanoferrat(III) und Cobalt(II)hexacyanocobaltat(III). Bevorzugt wird ein DMC-Katalysator auf Basis von Zinkhexacyanocobaltat ($Zn_3[Co(CN)_6]_2$) eingesetzt. Es können für die Copolymerisation von Alkylenoxid und Kohlendioxid in Schritt (ii) aber auch Metallkomplexkatalysatoren auf Basis der Metalle Zink und/oder Cobalt eingesetzt werden. Dies beinhaltet insbesondere sogenannte Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284), sogenannte Cobalt-Salen-Katalysatoren (beschrieben z.B. in US 7,304,172 B2, US 2012/0165549 A1) und bimetallische Zink-Komplexe mit makrozyklischen Liganden (beschrieben z.B. in M. R. Kember et al., Angew. Chem., Int. Ed., 2009, 48, 931). Für die Anlagerung von Alkylenoxid an die Starterverbindung S1 in Schritt (i) kann beispielsweise auch KOH eingesetzt werden.

Die Schritte (i) und (ii) können direkt nacheinander durchgeführt werden oder separat voneinander. So kann beispielsweise das aus Schritt (i) erhaltene Alkylenoxidpolymer aufgereinigt werden, bevor Kohlenstoffdioxid und Alkylenoxid an das Alkylenoxidpolymer in Schritt (ii) angelagert werden. Ein Aufreinigungsschritt ist beispielsweise von Vorteil, wenn in den Schritten (i) und (ii) verschiedene Katalysatoren verwendet werden. Es kann aber beispielsweise auch ein DMC-Katalysator in Schritt (i) eingesetzt werden und dieser im resultierenden Alkylenoxidpolymer belassen werden und als Katalysator in Schritt (ii) fungieren.

Das aus Schritt (i) resultierende Alkylenoxidpolymer weist vorzugsweise ein Molekulargewicht von 250 bis 2000 g/mol, bevorzugt 400 bis 1200 g/mol auf.

In einer bevorzugten Ausführungsform wird Schritt (ii) folgendermaßen durchgeführt:

($\alpha$) das Alkylenoxidpolymer aus Schritt (i) wird vorgelegt und gegebenenfalls Wasser und/oder andere leicht flüchtige Verbindungen durch erhöhte Temperatur und/oder reduziertem Druck entfernt ("Trocknung"), wobei gegebenenfalls ein Katalysator vor oder nach der Trocknung zum Alkylenoxidpolymer aus Schritt (i) zugesetzt wird,

($\beta$) gegebenenfalls zur Aktivierung eines DMC-Katalysators eine Teilmenge (bezogen auf die Gesamtmenge der bei der Aktivierung und Copolymerisation eingesetzten Menge an Alkylenoxiden in Schritt (ii)) an Alkylenoxid zu der aus Schritt ($\alpha$) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt ($\beta$) zur Aktivierung auch mehrfach erfolgen kann,

($\gamma$) Alkylenoxid und Kohlendioxid zu der aus Schritt ($\alpha$) oder gegebenenfalls ($\beta$) resultierenden Mischung zugesetzt werden, wobei die in Schritt ($\beta$) eingesetzten Alkylenoxide gleich oder verschieden sein können von den bei Schritt ($\gamma$) eingesetzten Alkylenoxiden.

Das erfindungsgemäß eingesetzte Polyethercarbonatpolyol **A1.1** weist vorzugsweise eine Hydroxylzahl (OH-Zahl) gemäß DIN 53240-1 (Juni 2013) von 20 mg KOH/g bis 120 mg KOH/g, bevorzugt von 20 mg KOH/g bis 100 mg KOH/g, besonders bevorzugt von 25 mg KOH/g bis 90 mg KOH/g, auf. Das Polyethercarbonatpolyol **A1.1** hat vorzugsweise einen $CO_2$-Gehalt von 10 bis 25 Gew.-%, bevorzugt 12 bis 20 Gew.-%. Die Funktionalität des Polyethercarbonatpolyols **A1.1** ist vorzugsweise von 1 bis 6, bevorzugt von 1 bis 4, besonders bevorzugt von 2 bis 3.

Der Anteil an eingebautem $CO_2$ ("aus Kohlendioxid stammende Einheiten"; "$CO_2$-Gehalt") in einem Polyethercarbonatpolyol lässt sich aus der Auswertung charakteristischer Signale im $^1$H-NMR-Spektrum bestimmen. Das nachfolgende Beispiel illustriert die Bestimmung des Anteils an aus Kohlendioxid stammenden Einheiten in einem auf 1,8-Octandiol gestarteten $CO_2$/Propylenoxid-Polyethercarbonatpolyol.

Der Anteil an eingebautem $CO_2$ in einem Polyethercarbonatpolyol sowie das Verhältnis von cyclischen Carbonat zu Polyethercarbonatpolyol kann mittels $^1$H-NMR (ein geeignetes Gerät ist von der Firma Bruker, DPX 400, 400 MHz; Pulsprogramm zg30, Wartezeit dl: 10s, 64 Scans) bestimmt werden. Die Probe wird jeweils in deuteriertem Chloroform gelöst. Die relevanten Resonanzen im $^1$H-NMR (bezogen auf TMS = 0 ppm) sind wie folgt:
Cyclisches Carbonat (welches als Nebenprodukt gebildet wurde) mit Resonanz bei 4,5 ppm; Carbonat, resultierend aus im Polyethercarbonatpolyol eingebautem Kohlendioxid mit Resonanzen bei 5,1 bis 4,8 ppm; nicht abreagiertes Propylenoxid (PO) mit Resonanz bei 2,4 ppm; Polyetherpolyol (d.h. ohne eingebautes Kohlendioxid) mit Resonanzen bei 1,2 bis 1,0 ppm; das als Startermolekül (soweit vorhanden) eingebaute 1,8 Octandiol mit einer Resonanz bei 1,6 bis 1,52 ppm.

Der Gewichtsanteil (in Gew.-%) polymer-gebundenen Carbonats (LC') in der Reaktionsmischung wurde nach Formel (II) berechnet,

$$LC' = \frac{[F(5{,}1-4{,}8)-F(4{,}5)]*102}{N}*100\% \qquad \text{(II)}$$

wobei sich der Wert für N ("Nenner" N) nach Formel (III) berechnet:

$$N = [F(5{,}1\text{-}4{,}8)\text{-}F(4{,}5)]*102+F(4{,}5)*102+F(2{,}4)*58+0{,}33*F(1{,}2\text{-}1{,}0)*58+0{,}25*F(1{,}6\text{-}1{,}52)*146 \qquad \text{(III)}$$

Dabei gelten folgende Abkürzungen:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol
F(1,6-1,52) = Fläche der Resonanz bei 1,6 bis 1,52 ppm für 1,8 Octandiol (Starter), soweit vorhanden.

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid und der Faktor 146 resultiert aus der Molmasse des eingesetzten Starters 1,8-Octandiol (soweit vorhanden).

Der Gewichtsanteil (in Gew.-%) an cyclischem Carbonat (CC') in der Reaktionsmischung wurde nach Formel (IV) berechnet,

$$CC' = \frac{F(4,5) * 102}{N} * 100\% \qquad (IV)$$

wobei sich der Wert für N nach Formel (III) berechnet.

Zusätzlich kann die Komponente **A1** weitere Verbindungen mit gegenüber Isocyanaten reaktionsfähigen Wasserstoffatomen enthalten. Die Komponente **A1.2** umfasst Polyetherpolyole mit einer Hydroxylzahl gemäß DIN 53240-1 (Juni 2013) von 20 mg KOH/g bis 250 mg KOH/g, vorzugsweise von 20 bis 112 mg KOH/g und besonders bevorzugt 20 mg KOH/g bis 80 mg KOH/g und ist frei von Carbonateinheiten. Die Herstellung der Verbindungen gemäß **A1.2** kann durch katalytische Addition von einem oder mehreren Alkylenoxiden an H-funktionelle Starterverbindungen erfolgen.

Als Alkylenoxide (Epoxide) können Alkylenoxide mit 2 bis 24 Kohlenstoffatomen eingesetzt werden. Bei den Alkylenoxiden mit 2 bis 24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols, wie beispielsweise Methylglycidylether, Ethylglycidylether, 2-Ethylhexylglycidylether, Allylglycidylether, Glycidylmethacrylat sowie epoxidfunktionelle Alkyoxysilane, wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltrlisopropoxysilan. Vorzugsweise werden als Alkylenoxide Ethylenoxid und/oder Propylenoxid und/oder 1,2 Butylenoxid eingesetzt. Die Alkylenoxide können dem Reaktionsgemisch einzeln, im Gemisch oder nacheinander zugeführt werden. Es kann sich um statistische oder um Block-Copolymere handeln. Werden die Alkylenoxide nacheinander dosiert, so enthalten die hergestellten Produkte (Polyetherpolyole) Polyetherketten mit Blockstrukturen.

Die H-funktionellen Starterverbindungen weisen Funktionalitäten von 2 bis 6 auf und sind vorzugsweise hydroxyfunktionell (OH-funktionell). Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Diese können auch in Mischung verwendet werden. Vorzugsweise wird als Starterverbindung 1,2-Propylenglykol und /oder Glycerin und/oder Trimethylolpropan und /oder Sorbitol eingesetzt.

Die Polyetherpolyole gemäß Komponente **A1.2** weisen einen Gehalt von 0 bis 60 Gew.-%, vorzugsweise von 0 bis 40 Gew.-%, besonders bevorzugt 0 bis 25 Gew.-% an Ethylenoxid auf.

Die Komponente **A1.3** umfasst Polyetherpolyole mit einer Hydroxylzahl gemäß DIN 53240-1 (Juni 2013) von 20 mg KOH/g bis 250 mg KOH/g, vorzugsweise von 20 bis 112 mg KOH/g und besonders bevorzugt 20 mg KOH/g bis 80 mg KOH/g.

Die Herstellung der Komponente **A1.3** erfolgt im Prinzip analog der der Komponente **A1.2,** wobei jedoch ein Gehalt an Ethylenoxid im Polyetherpolyol von > 60 Gew.-%, bevorzugt > 65 Gew.-% eingestellt wird.

Als Alkylenoxide und H-funktionelle Starterverbindungen kommen die gleichen in Frage, wie für Komponente **A1.2** beschrieben.

Als H-funktionelle Starterverbindungen kommen jedoch bevorzugt solche in Frage, die eine Funktionalität von 3 bis 6, besonders bevorzugt von 3 aufweisen, so dass Polyethertriole entstehen. Bevorzugte Starterverbindungen mit einer Funktionalität von 3 sind Glycerin und/oder Trimethylolpropan, besonders bevorzugt ist Glycerin.

In einer bevorzugten Ausführungsform ist die Komponente **A1.3** ein Glycerin-gestarteter trifunktioneller Polyether mit einem Ethylenoxidanteil von 68 bis 73 Gew.-% und einer OH-Zahl von 35 bis 40 mg KOH/g.

Die Komponente **A1.4** umfasst Polymerpolyole, PHD-Polyole und PIPA-Polyole.

Polymerpolyole sind Polyole, die Anteile von durch radikalische Polymerisation geeigneter Monomere wie Styrol oder Acrylnitril in einem Basispolyol, wie z.B. einem Polyetherpolyol und/oder Polyethercarbonatpolyol, erzeugten festen Polymeren enthalten.

PHD (Polyharnstoffdispersion)-Polyole werden beispielsweise hergestellt durch in situ Polymerisation eines Isocyanats oder einer Isocyanat-Mischung mit einem Diamin und/oder Hydrazin in einem Polyol, vorzugsweise einem Polyetherpolyol. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin in einem Polyetherpolyol, vorzugsweise einem Polyetherpolyol und/oder Polyethercarbonatpolyol, hergestellt durch Alkoxylierung eines trifunktionellen Starters (wie beispielsweise

Glycerin und/oder Trimethylolpropan), im Falle des Polyethercarbonatpolyols in Gegenwart von Kohlendioxid. Verfahren zur Herstellung von PHD-Dispersionen sind beispielsweise beschrieben in US 4,089,835 und US 4,260,530.

Bei den PIPA-Polyolen handelt es sich um durch Polyisocyanat-Polyaddition mit Alkanolaminenmodifizierte, vorzugsweise Triethanolamin-modifizierte Polyetherpolyole und/oder Polyethercarbonatpolyole, wobei das Polyethercarbonatpolyol eine Funktionalität von 2,5 bis 4 und eine Hydroxylzahl von 3 mg KOH/g bis 112 mg KOH/g (Molekulargewicht 500 bis 18000) aufweist. Vorzugsweise ist das Polyetherpolyol "EO-capped", d.h. das Polyetherpolyol besitzt terminale Ethylenoxidgruppen. PIPA-Polyole sind in GB 2 072 204 A, DE 31 03 757 A1 und US 4 374 209 A eingehend beschrieben.

Als Komponente **A1.5** können alle dem Fachmann bekannten Polyhydroxyverbindungen eingesetzt werden, die nicht unter die Definition der Komponenten **A1.1** bis **A1.4** fallen, und bevorzugt eine mittlere OH-Funktionalität > 1,5 aufweisen.

Dies können beispielsweise niedermolekulare Diole (z.B. 1,2-Ethandiol, 1,3- bzw. 1,2-Propandiol, 1,4-Butandiol), Triole (z.B. Glycerin, Trimethylolpropan) und Tetraole (z.B. Pentaerythrit), Polyesterpolyole, Polythioetherpolyole oder Polyacrylatpolyole, sowie Polyetherpolyole, Polyethercarbonatpolyole oder Polycarbonatpolyole, die nicht unter die Definition der Komponenten **A1.1** bis **A1.4** fallen, sein. Es können z.B. auch Ethylendiamin und Triethanolamin gestartete Polyether eingesetzt werden.

**Komponente A2**

Als Komponente **A2** werden Treibmittel wie chemische und/oder physikalische Treibmittel eingesetzt.

Als chemisches Treibmittel **A2.1** werden beispielsweise Wasser oder Carbonsäuren und deren Gemische verwendet. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

Als physikalisches Treibmittel **A2.2** eingesetzt werden beispielsweise niedrig siedende organische Verbindungen wie z. B. Kohlenwasserstoffe, Ether, Ketone, Carbonsäureester, Kohlensäureester, halogenierte Kohlenwasserstoffe. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen. Diese Siedepunkte haben den Vorteil, dass die organischen Verbindungen unter dem Einfluss der exothermen Polyadditionsreaktion verdampfen. Beispiele derartiger, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe, wie Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

In einer besonderen Ausführungsform enthält die Komponente **A2**

**A2.1** 0,5 bis 5 Gew.-Teile (bezogen auf **A** = 100 Gew.-Teile) chemische Treibmittel und/oder
**A2.2** 0 bis 15 Gew.-Teile (bezogen auf **A** = 100 Gew.-Teile) physikalische Treibmittel

Besonders bevorzugt wird als Komponente **A2** Wasser eingesetzt.

**Komponente A3**

Als Komponente **A3** werden Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesondere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe,

Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe), insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt (i) Harnstoff, Derivate des Harnstoffs und/oder (ii) die oben genannten Amine und Aminoether, dadurch gekennzeichnet, dass die Amine und Aminoether eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen. Als Beispiele für besonders bevorzugte Katalysatoren seien genannt: (3-Dimethylaminopropylamin)-Harnstoff, 1,1'-((3-(dimethylamino)propyl)imino)bis-2-propanol, N-[2-[2-(dimethylamino)ethoxy]ethyl]-N-methyl-1,3-propanediamin und 3-Dimethylaminopropylamin.

**Komponente B**

Als Komponente **B** werden aliphatische, cycloaliphatische, araliphatische, aromatische und heterocyclische Polyisocyanate eingesetzt, beispielsweise solche der Formel (V) (V) in der

n für eine ganze Zahl zwischen 2-4, vorzugsweise 2 oder 3 steht,
und
Q für einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen steht.

Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise werden als Komponente **B** mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI") eingesetzt.

Ganz besonders bevorzugt wird als Komponente **B** eine Diphenylmethandiisocyanat-Mischung eingesetzt, bestehend aus

a) 45 bis 90 Gew.-% 4,4'-Diphenylmethandiisocyanat und
b) 10 bis 55 Gew.-% 2,2'-Diphenylmethandiisocyanat und/oder 2,4'-Diphenylmethandiisocyanat und
c) 0 bis 45 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

In einer alternativen ganz besonders bevorzugten Ausführungsform wird als Komponente **B** eine Diphenylmethandiisocyanat-Mischung eingesetzt, bestehend aus

a) 35 bis 45 Gew.-% 4,4'-Diphenylmethandiisocyanat und
b) 1 bis 5 Gew.-% 2,2'-Diphenylmethandiisocyanat und/oder 2,4'-Diphenylmethandiisocyanat und
c) 50 bis 64 Gew.-% Polyphenylpolymethylenpolyisocyanat ("Mehrkern-MDI") und/oder 2,2'-, 2,4'-, 4,4'-Diphenylmethandiisocyanat-, und/oder pMDI-basierte Carbodiimide, Uretdione oder Uretdionimine.

**Komponente K**

Es kann gegebenenfalls auch eine Komponente K eingesetzt werden, um den Anteil an cyclischen Carbonaten im Polyurethan-Schaumstoff zu reduzieren. Als Komponente K können beispielsweise eingesetzt werden:

a) Ester ein- oder mehrbasiger Carbonäuren, wobei die pKs-Werte der (ersten) Dissoziation der Carbonsäuren 0,5 bis 4,0 beträgt, wie z.B. Methyl- und Ethylester der Oxalsäure und/oder Malonsäure,
b) Mono-, Di- und Polysulfonate von mono- und mehrfunktionellen Alkoholen, wie z.B. para-Toluolsulfonsäuremethylester und/oder Gemische von (C10-C21)Alkansulfonsäurephenylestern,
c) Ester der Phosphorsäure, Phosphonsäure, Phosphorigen Säure, Phosphinsäure, Phosphonigsäure und Phosphinigsäure, wie z.B. Phosphorsäuretriethylester und alkoxylierte Phosphorsäure
d) oligomere Alkylphosphate.

Die Komponente K wird vorzugsweise in dem erfindungsgemäßen Verfahren in einem Anteil von 0,01 bis 10,00 Gew.-Teile, bezogen auf die Summe der Gewichtsteile der Komponente **A1.1** + **A1.2** = 100 Gewichtsteile, eingesetzt. Es ist bevorzugt, dass die Komponente K in einem Anteil von 0,01 bis 8,00 Gew.-Tle., besonders bevorzugt 0,05 bis 6,00 Gew.-Tle., insbesondere bevorzugt 0,1 bis 6,00 Gew.-Tle., jeweils bezogen auf die Summe der Gewichtsteile der Komponente **A1.1** + **A1.2** = 100 Gewichtsteile, eingesetzt wird.

Die erfindungsgemäß erhaltenen Polyurethan-Schaumstoffe sind bevorzugt Polyurethan-Weichschaumstoffe oder Polyurethan-Halbhartschaumstoffe. Zur Herstellung der Polyurethan-Schaumstoffe werden die Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient.

Die Polyurethan-Schaumstoffe können als Form- oder auch als Block-Schaumstoffe hergestellt werden, wobei die Form-Schaumstoffe heiß- oder auch kalthärtend hergestellt werden können.

Gegenstand der Erfindung sind daher ein Verfahren zur Herstellung der Polyurethan-Schaumstoffe, die nach diesem Verfahren hergestellten Polyurethan-Schaumstoffe und deren Verwendung.

Die nach der Erfindung erhältlichen Polyurethan-Schaumstoffe finden beispielsweise folgende Anwendung: Möbelpolsterungen, Textileinlagen, Matratzen, Automobilsitze, Kopfstützen, Armlehnen, Schwämme und Bauelemente, sowie Sitz- und Armaturverkleidungen, und können Kennzahlen von 60 bis 250, bevorzugt 70 bis 120, besonders bevorzugt 75 bis 120 und Rohdichten von 4 bis 600 kg/m$^3$, bevorzugt 60 bis 120 kg/m$^3$ (Halbhartschaumstoff) bzw. bevorzugt 15 bis 55 kg/m$^3$ (Weichschaumstoff) aufweisen.

Unter der Isocyanat-Kennzahl (auch Kennzahl oder Isocyanat-Index genannt) wird der Quotient aus der tatsächlich eingesetzten Stoffmenge [Mol] an Isocyanatgruppen und der tatsächlich eingesetzten Stoffmenge [Mol] an Isocyanat-reaktiven Gruppen, multipliziert mit 100, verstanden:

$$\text{Kennzahl} = (\text{Mole Isocyanatgruppen} / \text{Mole Isocyanat-reaktive Gruppen}) * 100$$

Der NCO-Wert (auch: NCO-Gehalt, Isocyanatgehalt) wird bestimmt mittels EN ISO 11909:2007. Falls nicht anders angegeben, handelt es sich um die Werte bei 25°C.

Die bevorzugten Polyurethan-Weichschaumstoffe weisen vorzugsweise eine Rohdichte gemäß DIN EN ISO 3386-1-98 im Bereich von 15 bis 55 kg/m$^3$, bevorzugt 20 bis 50 kg/m$^3$ auf.

## Beispiele

Die Erfindung wird anhand der nachfolgenden Beispiele näher erläutert, ohne jedoch darauf beschränkt zu sein.

Prüfmethoden:

Die Stauchhärte der Polyurethan-Schaumstoffe wurde gemäß DIN EN ISO 3386-1 in der Fassung von September 2010 in Aufschäumrichtung bestimmt und die Rohdichte gemäß DIN EN ISO 845 in der Fassung von Oktober 2009.

Der Druckverformungsrest (DVR) wurde gemäß DIN EN ISO 1856 in der Fassung von Januar 2008 mit 90% Druckverformung bei 70°C für 22h gemessen.

Die Werte für die Zugfestigkeit und Bruchdehnung wurden bei 22°C und 48% relativer Luftfeuchte gemäß DIN EN ISO 1798 in der Fassung von April 2008 ermittelt.

Die Bestimmung der OH-Zahlen (Hydroxylzahlen) erfolgte gemäß der Vorschrift der DIN 53240-1 (Juni 2013).

Die Bestimmung der Emissionen in den Polyurethan-Weichschaumstoffen wurde gemäß der Zertifizierung LGA-Schadstoffgeprüft durchgeführt. Die Emissionen wurden nach Konditionierung der Probe in der Prüfkammer für 7 Tage gemessen. Prüfkammerbedingungen: 23°C$\pm$1°C, flächenspezifische Luftdurchflussrate: 0,5 m$^3$/(m$^2$·h) $\pm$ 0,05 m$^3$/(m$^2$·h) und rel. Luftfeuchte 50%$\pm$3%.

Rohstoffe:

**AO-Polymer 1** Alkylenoxidpolymer auf Basis einer Propylenglykol/Glycerin-Mischung und Anlagerung von 90 Gew.-% Propylenoxid und 10 Gew.-%Ethylenoxid, jeweils bezogen auf die Gesamtmasse des eingesetzten Alkylenoxids, Funktionalität von 2,8 und Molekulargewicht von 670 g/mol, hergestellt durch DMC-Katalyse

**AO-Polymer 2** Alkylenoxidpolymer auf Basis einer Propylenglykol/Glycerin-Mischung und Anlagerung von 80 Gew.-% Propylenoxid und 20 Gew.-%Ethylenoxid, jeweils bezogen auf die Gesamtmasse des eingesetzten Alkylenoxids, Funktionalität von 2,8 und Molekulargewicht von 670 g/mol, hergestellt durch DMC-Katalyse

**AO-Polymer 3** Alkylenoxidpolymer auf Basis einer Propylenglykol/Glycerin-Mischung und Anlagerung von 100 Gew.-% Propylenoxid, bezogen auf die Gesamtmasse des eingesetzten Alkylenoxids, Funktionalität von 2,8 und Molekulargewicht von 670 g/mol, hergestellt durch DMC-Katalyse

**A1.1-1** Polyethercarbonatpolyol auf Basis von AO-Polymer 1 und anschließender Anlagerung von Kohlenstoffdioxid und 100 Gew.-% Propylenoxid, Funktionalität von 2,8, OH-Zahl von 55 mg KOH/g, $CO_2$-Gehalt von 14 Gew.-%, hergestellt durch DMC-Katalyse

**A1.1-2** Polyethercarbonatpolyol auf Basis von AO-Polymer 2 und anschließender Anlagerung von Kohlenstoffdioxid und 100 Gew.-% Propylenoxid, Funktionalität von 2,8, OH-Zahl von 55 mg KOH/g, $CO_2$-Gehalt von 14 Gew.-%, hergestellt durch DMC-Katalyse

**A1.5-1** Polyethercarbonatpolyol auf Basis von AO-Polymer 3 und anschließender Anlagerung von Kohlenstoffdioxid und 100 Gew.-% Propylenoxid, Funktionalität von 2,8, OH-Zahl von 55 mg KOH/g, $CO_2$-Gehalt von 14 Gew.-%, hergestellt durch DMC-Katalyse

**A2.1-1** Wasser

**A3-1** Silikonstabilisator (Tegostab BF2370)

**A3-2** Aminkatalysator (Niax A1)

**A3-3** Zinnkatalysator (DABCO T9)

**B-1** Gemisch aus 2,4- und 2,6-Toluylendiisocyanat in einem Gewichtsverhältnis von 80:20

Herstellung von Polyurethan-Schaumstoffen:

Die in der Tabelle 1 beschriebenen Polyurethan-Weichschaumstoffe wurden in einem diskontinuierlichen Verfahren hergestellt.

Die Komponenten A1-1 bis A3-2 werden nach Rezeptvorgabe (siehe Tabelle 1) eingewogen und mit einem Rührwerk bei einer Drehzahl von 680 U/min 20 Sek. lang bei Raumtemperatur verrührt. Anschließend wird die notwendige Menge an Komponente A3-3 zugegeben und die Mischung bei einer Drehzahl von 680 U/min 10 Sek. lang mit einem Rührwerk verrührt.

Die vorab eingewogene Menge an Komponente B-1 wird zugegeben und bei einer Drehzahl von 750 U/min 10 Sek. lang mit einem Rührwerk verrührt. Anschließend wird die Masse in eine 1 $m^3$ Form zugegeben. Die Wände der 1 $m^3$ Form wurden zuvor auf der Innenseite mit Polyethylenfolie verkleidet.

Die Höhe der Polyurethanweichschaumstoffblöcke betrug ca. 74-82 cm. Der fertige Polyurethan-Weichschaumstoff wurde im Nachreaktionslager ca. 20-24 Stunden gelagert, bevor dieser zur Ausprüfung in Probekörper gesägt wurde. Für die Bestimmung der mechanischen Eigenschaften der Polyurethan-Weichschaumstoffe wurden jeweils zwei Probekörper analysiert. In Tabelle 1 ist jeweils der Mittelwert der Messungen dargestellt.

**Tabelle 1: Formulierungen und mechanische Eigenschaften**

| **Beispiel** | | **1** | **2** | **3*** |
|---|---|---|---|---|
| A1.1-1 | Gew.-Tle. | 100 | | |
| A1.1-2 | Gew.-Tle. | | 100 | |
| A1.5-1 | Gew.-Tle. | | | 100 |
| A2.1-1 | Gew.-Tle. | 4,5 | 4,5 | 4,5 |
| A3-1 | Gew.-Tle. | 1,2 | 1,2 | 1,2 |
| A3-2 | Gew.-Tle. | 0,1 | 0,1 | 0,1 |
| A3-3 | Gew.-Tle. | 0,17 | 0,17 | 0,17 |

(fortgesetzt)

| **Beispiel** | | **1** | **2** | **3*** |
|---|---|---|---|---|
| B-1 | Gew.-Tle. | 56,33 | 56,33 | 56,33 |
| Index | - | 108 | 108 | 108 |
| Rohdichte | kg/m$^3$ | 21,1 | 21 | 21,4 |
| Stauchhärte (4. Zyklus) | kPa | 3,8 | 3,6 | 5,1 |
| DVR | % | 5,5 | 5,3 | 4,1 |
| Bruchdehnung | % | 145 | 155 | 81 |
| Zugfestigkeit | kPa | 119 | 121 | 88 |
| Gesamtemission | $\mu$g/m$^3$ | 515 | 397 | |
| davon cPC | $\mu$g/m$^3$ | 490 | 370 | |
| *Vergleichsbeispiel | | | | |

In Tabelle 1 sind die mechanischen Eigenschaften der erhaltenen Polyurethan-Schaumstoffe aus den Beispielen 1 bis 3 dargestellt. Nach dem erfindungsgemäßen Verfahren wurden in den Beispielen 1 und 2 jeweils ein Polyethercarbonatpolyol **A1.1** eingesetzt. Die Polyurethan-Schaumstoffe aus Beispiel 1 und 2 erreichen Werte für die Zugfestigkeit von 119 kPa, bzw. 121 kPa und für die Bruchdehnung Werte von 145% bzw. 155%. Im Gegensatz dazu wurde in Beispiel 3 (Vergleich) ein Polyethercarbonatpolyol A1.5-1 auf Basis eines Alkylenoxidpolymers mit 100 Gew.-% Propylenoxid eingesetzt. Der resultierende Polyurethan-Schaumstoff aus Beispiel 3 weist nur eine Zugfestigkeit von 88 kPa und eine Bruchdehnung von 81% auf.

Die erfindungsgemäß hergestellten Polyurethan-Weichschaumstoffe weisen ebenfalls niedrige Emissionswerte bei den Messungen gemäß LGA-Zertifizierung auf.

## Patentansprüche

1. Verfahren zur Herstellung von Polyurethan-Schaumstoffen, wobei die Komponenten

   **A** enthaltend

   **A1** Verbindungen mit gegenüber Isocyanaten reaktionsfähigen Wasserstoffatomen, enthaltend

   **A1.1** Polyethercarbonatpolyol,

   **A2** Treibmittel
   und gegebenenfalls
   **A3** Hilfs- und Zusatzstoffe
   und

   **B** Di- und/oder Polyisocyanaten,
   miteinander umgesetzt werden, **dadurch gekennzeichnet, dass** die Struktur von **A1.1** aufgebaut ist aus einer Starterverbindung S1 mit einem Molekulargewicht von 18 bis 200 g/mol an der ein erster, innerer Alkylenoxidblock enthaltend 0,5 bis 30 Gew.-% Ethylenoxid-Baueinheiten, bezogen auf die Gesamtmasse des eingesetzten Alkylenoxids in dem ersten Alkylenoxidblock, und ein zweiter, äußerer Block aus Kohlenstoffdioxid und Alkylenoxid angelagert ist.

2. Verfahren gemäß Anspruch 1, **dadurch gekennzeichnet, dass** Komponente **A1** die folgende Zusammensetzung aufweist:

   **A1.1** 40 bis 100 Gew.-Teile Polyethercarbonatpolyol mit einer Hydroxylzahl gemäß DIN 53240-1 (Juni 2013) von 20 mg KOH/g bis 120 mg KOH/g,
   **A1.2** 0 bis 60 Gew.-Teile Polyetherpolyol mit einer Hydroxylzahl gemäß DIN 53240-1 (Juni 2013) von 20 mg

KOH/g bis 250 mg KOH/g und einem Gehalt an Ethylenoxid von 0 bis 60 Gew.-%, wobei Polyetherpolyol **A1.2** frei von Carbonateinheiten ist,
**A1.3** 0 bis 20 Gew.-Teile Polyetherpolyol mit einer Hydroxylzahl gemäß DIN 53240-1 (Juni 2013) von 20 mg KOH/g bis 250 mg KOH/g, und einem Gehalt an Ethylenoxid von > 60 Gew.-%, wobei Polyetherpolyol **A1.3** frei von Carbonateinheiten ist,
**A1.4** 0 bis 40 Gew.-Teile Polymerpolyol, PHD-Polyol und/oder PIPA-Polyol,
**A1.5** 0 bis 40 Gew.-Teile eines Polyols welches nicht unter die Definition der Komponenten **A1.1** bis **A1.4** fällt,

wobei die Angabe der Gewichtsteile jeweils bezogen sind auf die Summe der Gewichtsteile der Komponenten **A1.1** + **A1.2** + **A1.3** + **A1.4** + **A1.5** = 100 Gewichtsteile.

**3.** Verfahren gemäß Anspruch 1 oder 2, **dadurch gekennzeichnet, dass** der Anteil an Ethylenoxid-Baueinheiten im ersten Alkylenoxidblock von **A1.1** 1 bis 25 Gew.-%, bevorzugt 5 bis 22 Gew.-% beträgt.

**4.** Verfahren gemäß einem der Ansprüche 1 bis 3, **dadurch gekennzeichnet, dass** der erste Alkylenoxidblock nur aus Ethylenoxid- und Propylenoxid-Baueinheiten besteht.

**5.** Verfahren gemäß einem der Ansprüche 1 bis 4, **dadurch gekennzeichnet, dass** das im zweiten Block angelagerte Alkylenoxid mindesten 90 Gew.-% Propylenoxid enthält.

**6.** Verfahren gemäß Anspruch 1, **dadurch gekennzeichnet, dass** das Polyethercarbonatpolyol **A1.1** durch einen Prozess erhalten wird, umfassend die Schritte

(i) Anlagerung von Alkylenoxid enthaltend 0,5 bis 30 Gew.-% Ethylenoxid zur Bildung eines ersten Alkylenoxidblocks an eine Starterverbindung S1 mit einem Molekulargewicht von 18 bis 200 g/mol, vorzugsweise in Anwesenheit eines DMC-Katalysators, woraus ein Alkylenoxidpolymer resultiert,
(ii) Anlagerung von Kohlenstoffdioxid und Alkylenoxid, vorzugsweise in Anwesenheit eines DMC-Katalysators, an das aus (i) resultierende Alkylenoxidpolymer zur Bildung eines Polyethercarbonatpolyols.

**7.** Verfahren gemäß Anspruch 6, **dadurch gekennzeichnet, dass** das aus Schritt (i) resultierende Alkylenoxidpolymer ein Molekulargewicht von 250 bis 2000 g/mol aufweist, bevorzugt 400 bis 1200 g/mol.

**8.** Verfahren gemäß einem der Ansprüche 1 bis 7, **dadurch gekennzeichnet, dass** es sich bei der Starterverbindung S1 um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit und Sorbitol handelt.

**9.** Verfahren gemäß einem der Ansprüche 1 bis 8, **dadurch gekennzeichnet, dass** das Verfahren bei einer Isocyanat-Kennzahl von 75 bis 120 durchgeführt wird.

**10.** Polyurethan-Schaumstoff, bevorzugt Polyurethan-Weichschaumstoff, hergestellt durch ein Verfahren gemäß einem der Ansprüche 1 bis 9.

**11.** Verwendung eines Polyurethan-Schaumstoffes gemäß Anspruch 10 zur Herstellung von Möbelpolsterungen, Textileinlagen, Matratzen, Automobilsitzen, Kopfstützen, Armlehnen, Schwämmen, Dachhimmeln, Türseitenverkleidungen, Sitzauflagen oder Bauelementen.

**12.** Verfahren zur Herstellung von Polyethercarbonatpolyolen, umfassend die Schritte

(i) Anlagerung von Alkylenoxid enthaltend 0,5 bis 30 Gew.-% Ethylenoxid zur Bildung eines ersten Alkylenoxidblocks an eine Starterverbindung S1 mit einem Molekulargewicht von 18 bis 200 g/mol, vorzugsweise in Anwesenheit eines DMC-Katalysators, woraus ein Alkylenoxidpolymer resultiert,
(ii) Anlagerung von Kohlenstoffdioxid und Alkylenoxid, vorzugsweise in Anwesenheit eines DMC-Katalysators, an das aus (i) resultierende Alkylenoxidpolymer zur Bildung eines Polyethercarbonatpolyols.

**13.** Verfahren gemäß Anspruch 12, **dadurch gekennzeichnet, dass** in Schritt (ii)

(α) eine Teilmenge des aus (i) resultierenden Alkylenoxidpolymers und/oder ein Suspensionsmittel, das keine H-funktionelle Gruppen aufweist, in einem Reaktor gegebenenfalls gemeinsam mit DMC-Katalysator vorgelegt wird,

(β) gegebenenfalls zur Aktivierung eines DMC-Katalysators eine Teilmenge (bezogen auf die Gesamtmenge der bei der Aktivierung und Copolymerisation eingesetzten Menge an Alkylenoxid) von Alkylenoxid zu der aus Schritt (α) resultierenden Mischung zugesetzt wird, wobei diese Zugabe einer Teilmenge an Alkylenoxid gegebenenfalls in Gegenwart von $CO_2$ erfolgen kann, und wobei dann die aufgrund der folgenden exothermen chemischen Reaktion auftretende Temperaturspitze ("Hotspot") und/oder ein Druckabfall im Reaktor jeweils abgewartet wird, und wobei der Schritt (β) zur Aktivierung auch mehrfach erfolgen kann,

(γ) das aus (i) resultierende Alkylenoxidpolymer, Alkylenoxid und gegebenenfalls ein Suspensionsmittel, das keine H-funktionelle Gruppen aufweist, und Kohlendioxid während der Reaktion in den Reaktor zudosiert werden.

**14.** Verfahren gemäß Anspruch 12 oder 13, **dadurch gekennzeichnet, dass** das aus Schritt (i) resultierende Alkylenoxidpolymer ein Molekulargewicht von 250 bis 2000 g/mol aufweist, bevorzugt 400 bis 1200 g/mol.

**15.** Polyethercarbonatpolyol auf Basis einer Starterverbindung S1 mit einem Molekulargewicht von 18 bis 200 g/mol, an der ein erster, innerer Alkylenoxidblock enthaltend 0,5 bis 30 Gew.-% Ethylenoxid-Baueinheiten, bezogen auf die Gesamtmasse des eingesetzten Alkylenoxids in dem ersten Block, und ein zweiter, äußerer Block aus Kohlenstoffdioxid und Alkylenoxid angelagert ist.

Europäisches Patentamt
European Patent Office
Office européen des brevets

# EUROPÄISCHER RECHERCHENBERICHT

Nummer der Anmeldung
EP 21 15 7473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2008/058913 A1 (BASF SE [DE]; MIJOLOVIC DARIJO [DE] ET AL.) 22. Mai 2008 (2008-05-22) * Seite 6, Zeilen 13-20; Ansprüche 1-12,15 * ----- | 1-15 | INV. C08G18/16 C08G18/44 C08G18/48 C08G18/76 C09D175/04 |

| RECHERCHIERTE SACHGEBIETE (IPC) |
|---|
| C08G C09D |

Der vorliegende Recherchenbericht wurde für alle Patentansprüche erstellt

1

| Recherchenort | Abschlußdatum der Recherche | Prüfer |
|---|---|---|
| München | 29. Juli 2021 | Scheuer, Sylvie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

# ANHANG ZUM EUROPÄISCHEN RECHERCHENBERICHT ÜBER DIE EUROPÄISCHE PATENTANMELDUNG NR. EP 21 15 7473

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-07-2021

| Im Recherchenbericht angeführtes Patentdokument | Datum der Veröffentlichung | Mitglied(er) der Patentfamilie | Datum der Veröffentlichung |
|---|---|---|---|
| WO 2008058913 A1 | 22-05-2008 | AT 514726 T | 15-07-2011 |
| | | CN 101535364 A | 16-09-2009 |
| | | DK 2091990 T3 | 26-09-2011 |
| | | EP 2091990 A1 | 26-08-2009 |
| | | ES 2366931 T3 | 26-10-2011 |
| | | JP 5653620 B2 | 14-01-2015 |
| | | JP 2010509479 A | 25-03-2010 |
| | | KR 20090088377 A | 19-08-2009 |
| | | US 2009306239 A1 | 10-12-2009 |
| | | WO 2008058913 A1 | 22-05-2008 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012130760 A1
- WO 2015078801 A
- US 7304172 B2
- US 20120165549 A1
- US 4089835 A
- US 4260530 A
- GB 2072204 A
- DE 3103757 A1
- US 4374209 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- **M. H. CHISHOLM et al.** *Macromolecules,* 2002, vol. 35, 6494
- **S. D. ALLEN.** *J. Am. Chem. Soc.,* 2002, vol. 124, 14284
- **M. R. KEMBER et al.** *Angew. Chem., Int. Ed.,* 2009, vol. 48, 931